Europäisches Patentamt

European Patent Office

Office européen des brevets

(19)

(11) Veröffentlichungsnummer: **0 081 685**
**B1**

(12) **EUROPÄISCHE PATENTSCHRIFT**

(45) Veröffentlichungstag der Patentschrift:
14.05.86

(51) Int. Cl.⁴: **G 02 B 6/12**

(21) Anmeldenummer: 82110456.9

(22) Anmeldetag: 12.11.82

(54) Filmwellenleiter.

(30) Priorität: 01.12.81 DE 3147488

(43) Veröffentlichungstag der Anmeldung:
22.06.83 Patentblatt 83/25

(45) Bekanntmachung des Hinweises auf die Patenterteilung:
14.05.86 Patentblatt 86/20

(84) Benannte Vertragsstaaten:
DE FR GB IT NL

(56) Entgegenhaltungen:
CA - A - 1 108 903
DE - A - 2 331 497
US - A - 3 614 198
US - A - 3 957 341
US - A - 4 141 621
US - A - 4 178 066
US - A - 4 183 617

IEEE JOURNAL OF QUANTUM ELECTRONICS, Band
QE-16, Nr. 7, 1980, New York, W.S.C. CHANG et
al.:"Fresnel lenses in optical waveguides", Seiten
744-754
Applied Optics, Nov. 1971, Vol. 10, No. 11, S. 2395-2413

(73) Patentinhaber: **ANT Nachrichtentechnik GmbH,
Gerberstrasse 33, D-7150 Backnang (DE)**

(72) Erfinder: **Unger, Hans-Georg, Prof. Dr.-Ing., Wöhler
Strasse 10, D-3300 Braunschweig (DE)**
Erfinder: **Jacob, Jörn, Berliner Strasse 75,
D-3300 Braunschweig (DE)**

(74) Vertreter: **Schickle, Gerhard, Dipl.-Ing. et al, ANT
Nachrichtentechnik GmbH Patent- und Lizenzabteilung
Gerberstrasse 33, D-7150 Backnang (DE)**

## Beschreibung

Die vorliegende Erfindung betrifft einen planaren Filmwellenleiter und/oder Komponenten für die integrierte Optik, bestehend aus einem Trägersubstrat, einem darauf aufgebrachten, die optischen Wellen führenden Film und mindestens einer auf dem Film angeordneten optisch wirksamen Auflage, welche entweder schwach oder stark dispersiv ist, wobei die Brechzahl des Trägersubstrats kleiner ist als die des Films und die Brechzahl des Films kleiner ist als die der Auflage.

Ein derartiger planarer Filmwellenleiter mit integrierten Linsen und einem Prisma ist aus der CA-PS 1 108 903 bekannt. Dabei sind die Linsen aus einer optisch wirksamen Auflage mit niedriger Dispersion gebildet, welche auf einem die optischen Wellen führenden Film aufgebracht ist, und die das Prisma bildende Auflage besitzt eine hohe Dispersion. Das gewünschte dispersive Verhalten der Auflagen und des Films wird durch bestimmte Materialien, wie z.B. $As_2S_3$ für eine hohe Dispersion und $Ta_2O_5$ für eine niedrige Dispersion, erreicht. Man spricht hier von einer sogenannten Materialdispersion. Eine exakte Einstellung gewünschter Dispersionswerte der optisch wirksamen Schichten sind durch die Zusammensetzung der Materialien nur sehr schwer zu erreichen.

Der Erfindung liegt daher die Aufgabe zugrunde, einen planaren Filmwellenleiter und/oder Komponenten der eingangs genannten Art anzugeben, deren dispersives Verhalten sehr genau auf gewünschte Werte gebracht werden kann, um somit integrierte Komponenten mit exakten optischen Eigenschaften realisieren zu können.

Erfindungsgemäss wird diese Aufgabe durch die im Kennzeichen der Ansprüche 1, 2 oder 3 angegebenen Merkmale gelöst.

Zweckmässige Ausführungen der Erfindung gehen aus den Unteransprüchen hervor.

Anhand von in der Zeichnung dargestellten Ausführungsbeispielen wird nun die Erfindung näher erläutert. Es zeigen:

Fig. 1 einen Filmwellenleiter im Querschnitt,
Fig. 2 einen Filmwellenleiter mit zwei Linsen und einem Prisma in der Draufsicht,
Fig. 3 einen Prismenkoppler im Querschnitt und
Fig. 4 bis 6 Dispersionsdiagramme für verschiedene Brechzahlen und Dickenverhältnisse der optisch wirksamen Schichten des Filmwellenleiters.

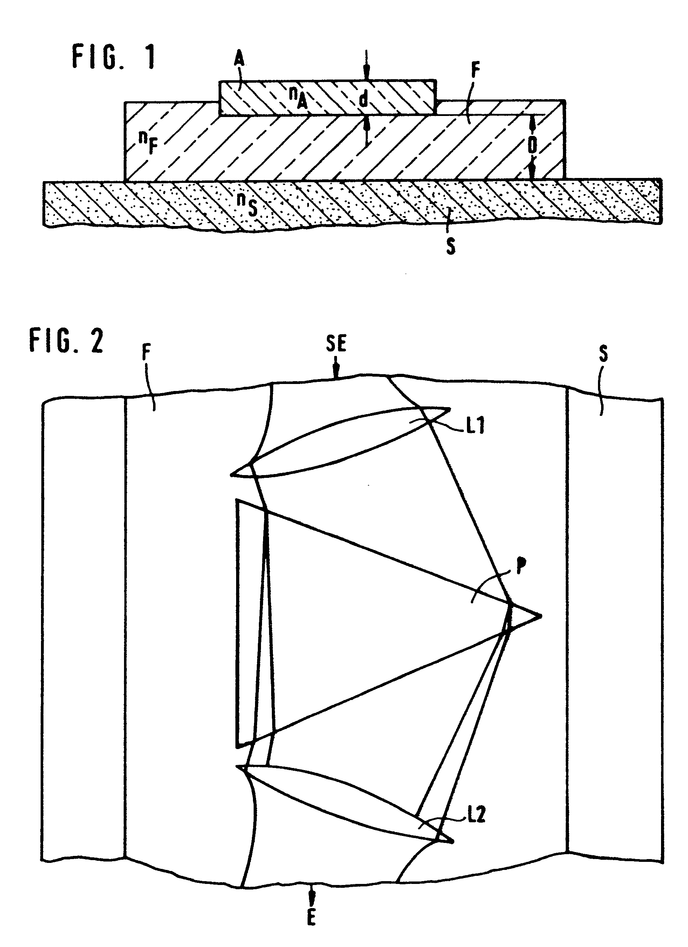

In Fig. 1 ist ein erfindungsgemäss aufgebauter Filmwellenleiter im Querschnitt dargestellt. Er besteht aus einem Substrat S mit der Brechzahl $n_S$ als Träger des Films F, über den im wesentlichen die Lichtwellen weitergeleitet werden. Dieser Film besitzt eine Dicke D und eine zugehörige Brechzahl $n_F$. Beim dargestellten Ausführungsbeispiel liegt auf dem Film F eine optisch wirksame Auflage A, die relativ dünn ausgebildet ist.

Die Dicke dieser Auflage ist mit d bezeichnet und die zugehörige Brechzahl $n_A$. Diese Auflage A bewirkt bei geeigneter Dimensionierung, dass der dargestellte Filmwellenleiter dispersionsarm ist. Die erwähnte Auflage kann auf den Film F aufgebracht werden, wobei sie in Längsrichtung des Filmstreifens verläuft. Ferner kann die Auflage A ganz in den Film eingebracht werden, derart, dass ihre Oberfläche mit der Oberfläche des Films eine durchgehende Ebene bildet. Beim dargestellten Ausführungsbeispiel ist die Auflagefläche A nur teilweise in den Film F eingelegt. Man erhält über ein möglichst breites Frequenzband gleiches Dispersionsverhalten, wenn man folgende Bedingung einhält:

$$0,05\,D < d\ < 1,00\,D$$
$$n_S \quad < n_F < n_A$$

Abweichend von dem dargestellten Beispiel kann natürlich die Auflage A genauso ausgebildet werden wie der darunterliegende Film F. Es kann im Rahmen der oben genannten Bedingungen erreicht werden, dass der Filmwellenleiter mit Auflage dispersionsarm oder stark dispersiv wird. Bei der letztgenannten Ausgestaltung kann der Filmwellenleiter mit Auflage in einem Filmprisma zur spektralen Zerlegung dienen und in Multiplexern oder Demultiplexern eingesetzt werden.

In der Fig. 2 ist eine andere Ausführungsform der Erfindung aufgezeigt. Auf einem Substrat S ist wieder wie in der Fig. 1 ein Film F aufgebracht. Zur Herstellung von die Lichtausbreitung in gewünschter Weise beeinflussenden Komponenten ist bei diesem Ausführungsbeispiel die Auflage A auf dem Film F in Form einer Linse L1 ausgebildet. Als weitere Möglichkeit ist in der Fig. 2 mit P dargelegt, dass man die Auflage A aus der Fig. 1 auch als Prisma ausbilden kann. Für die Dimensionierung der erwähnten Komponenten gelten die eingangs genannten Grenzwerte. Um die transversale Ausdehnung der Filmwelle nach Durchgang durch das Prisma wieder einzuengen, wird auf der in der Fig. 2 dargestellten Anordnung eine weitere Linse L2 angeordnet. So kann man mit den Elementen L1, P und L2 auf dem Filmwellenleiter F einen Wellenablenker, Multiplexer oder Demultiplexer aufbauen. Das zu verarbeitende Lichtsignal an der Stelle SE kann von einem geeigneten Sender in die Anordnung eingespeist werden. Innerhalb der Anordnung ist der Verlauf der Wellen durch die eingezeichneten Linien zwischen den Komponenten L1, P und L2 angedeutet. Auf die mit E bezeichnete Ausgangsstelle der Anordnung können dann die einzelnen Kanäle des bei SE eingespeisten übertragenen Frequenzbandes ausgekoppelt werden.

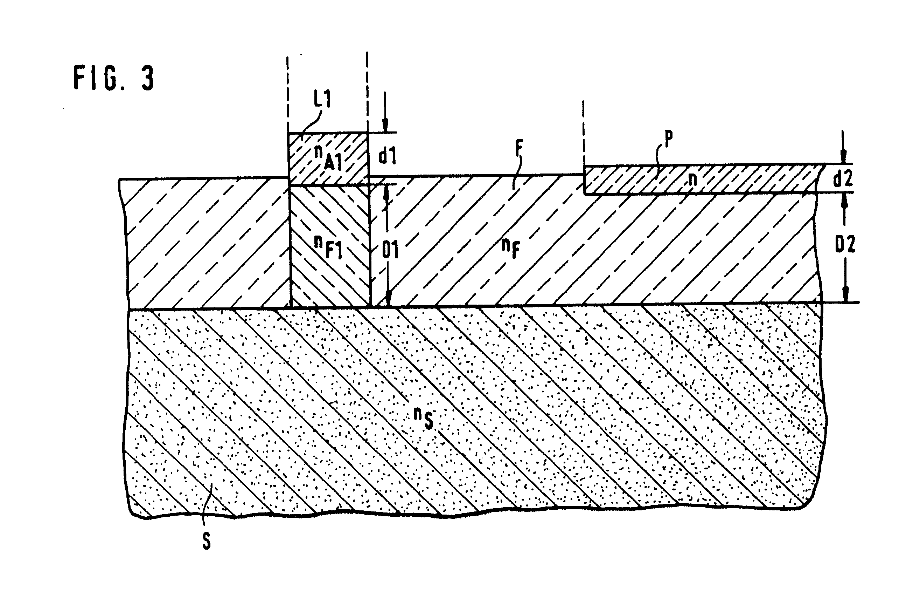

In der Fig. 3 ist ein Prismenkoppler in Filmtechnik hergestellt, und zwar im Längsschnitt. Der Grundfilm F mit seiner Brechzahl $n_F$ ist wieder auf einem Trägersubstrat S der Brechzahl $n_S$ aufgebracht. Die Dimensionierung erfolgt so, dass der Filmwellenleiter möglichst kleine Dispersion aufweist. An geeigneter Stelle ist dafür der Grundfilm F unterbrochen durch einen z.B. linsenförmigen Abschnitt L1 als Auflage. Dieser Abschnitt besteht aus einem unteren Teil der Dicke D1 mit der Brechzahl $n_{F1}$, der klar den Film für die Auflage herstellt und dem oberen die Auflage bildenden Teil der Dicke d1 mit der Brechzahl $n_{A1}$. Der Linsenteil L1 ragt als Auflage teilweise über den Film F hinaus. Am rechten Ende des dargestellten Filmwellenleiters F ist durch eine teilweise in den Filmwellenleiter F eingelegte weitere Auflage ein Prisma P realisiert. Es hat die Brechzahl $n_{A2}$ und eine Dicke d2. Die massgebliche Dicke des Filmwellenleiters F unter dem aufgesetzten Prisma P ist mit D2 bezeichnet.

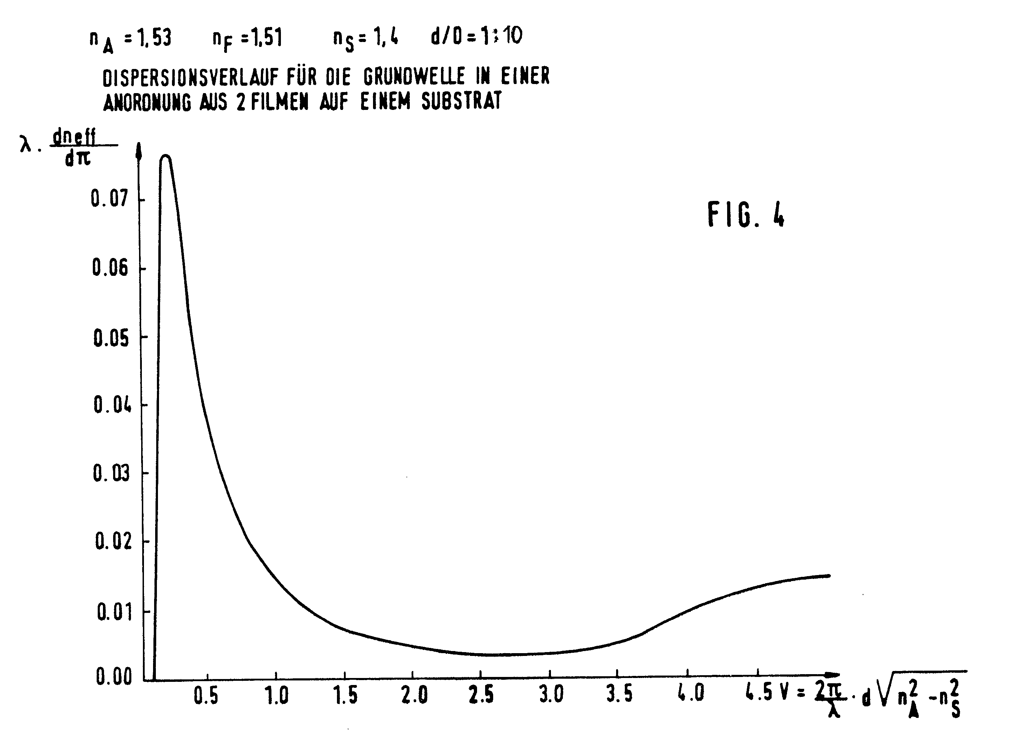

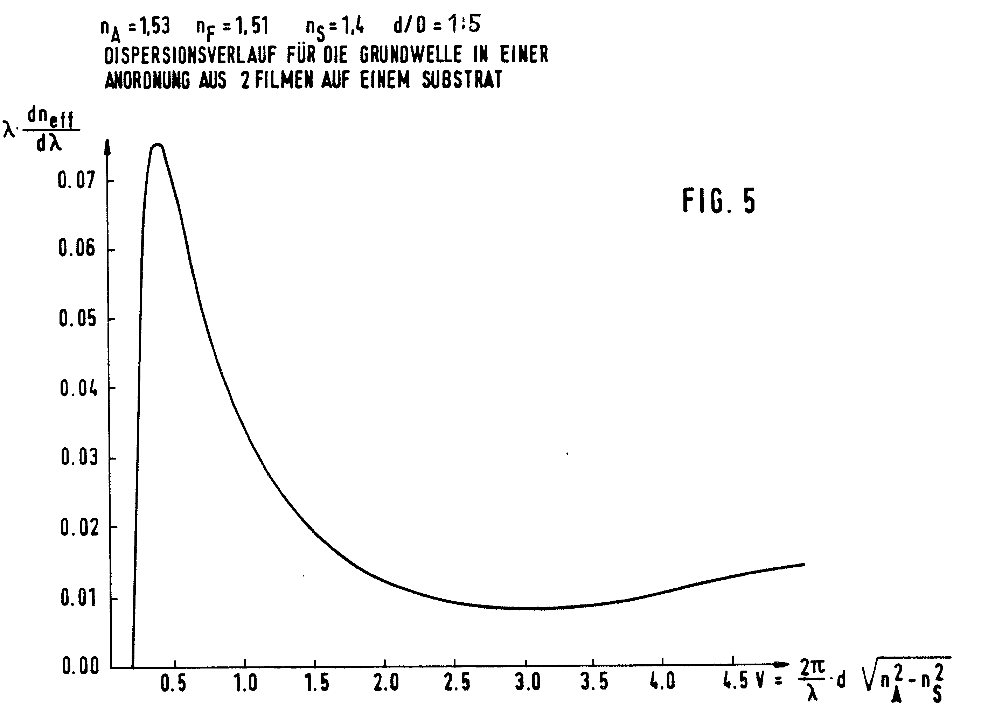

Aufgrund unterschiedlicher Dimensionierungen kann man somit einen dispersionsarmen Filmwellenleiter herstellen, beispielsweise für Anwendungen in breitbandigen Linsen. In der Fig. 4 und 5 ist je ein Diagramm dargestellt über den Dispersionsverlauf einer Filmstruktur in Abhängigkeit vom Filmparameter V für die Grundwelle. Auf der senkrechten Achse ist die Wellenlänge $\lambda$ aufgetragen multipliziert mit der Ableitung der effektiven Brechzahl $n_{eff}$ der Filmgrundwelle nach der Wellenlänge. Man erkennt im unteren Teil der Kurven einen relativ breitbandigen Bereich, in dem die Dispersion einen niedrigen, etwa konstanten Wert aufweist.

Diese Struktur ist für die Verwendung als Filmlinse geeignet oder für ein dispersionsarmes Filmprisma in einem Wellenablenker.

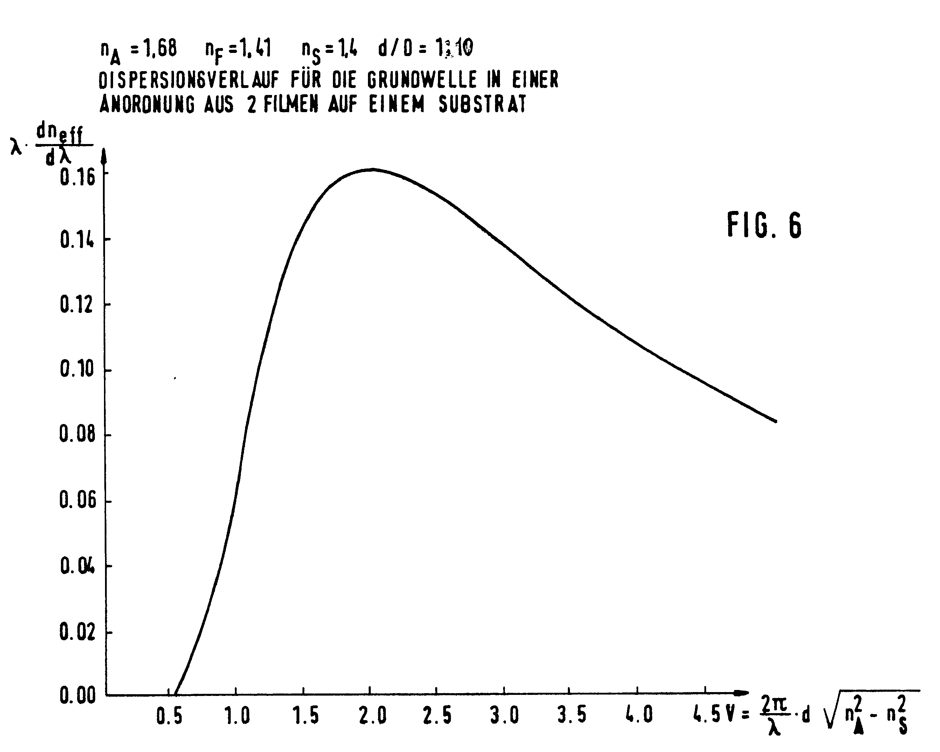

Will man die Erfindung für Filmprismen einsetzen, die stark dispersiv sein sollen, so wählt man den Filmparameter V der Anordnung so, dass man eine stark dispersive Filmstruktur erhält. In der Fig. 6 ist ein derartiger Dispersionsverlauf dargestellt, der ein breites Maximum aufweist.

Die Brechzahlen der aufgezeigten Beispiele entsprechen denen von Gläsern oder transparenten Kunststoffen, wie sie für den Aufbau solcher Filmstrukturen üblich sind.

**Patentansprüche**

1. Planarer Filmwellenleiter und/oder Komponenten für die integrierte Optik, bestehend aus einem Trägersubstrat, einem darauf aufgebrachten, die optischen Wellen führenden Film und mindestens einer auf dem Film angeordneten optisch wirksamen Auflage, welche entweder schwach oder stark dispersiv ist, wobei die Brechzahl des Trägersubstrats kleiner ist als die des Films und die Brechzahl des Films kleiner ist als die der Auflage, dadurch gekennzeichnet, dass für minimale Dispersion bei einer Brechzahl $(n_S)$ des Trägersubstrats (S) von 1,4 und einer Brechzahl $(n_F)$ des Films (F) von 1,51 sowie einer Brechzahl $(n_A)$ der Auflage (A) von 1,53 und einem Verhältnis der Dicke (d) der Auflage (A) zur Dicke (D) des Films (F) von 1:10 die Dicke (d) der Auflage (A) zu etwa einem 0,65fachen der Wellenlänge $\lambda$ der optischen Strahlung gewählt wird, so dass ein Filmparameter

$$V = \frac{2\pi}{\lambda} \cdot d \sqrt{n_A^2 - n_S^2}$$

den Wert von ungefähr 2,7 annimmt (vgl. Fig. 1 und 4).

2. Planarer Filmwellenleiter und/oder Komponenten für die integrierte Optik, bestehend aus einem Trägersubstrat, einem darauf aufgebrachten, die optischen Wellen führenden Film und mindestens einer auf dem Film angeordneten optisch wirksamen Auflage, welche entweder schwach oder stark dispersiv ist, wobei die Brechzahl des Trägersubstrats kleiner ist als die des Films und die Brechzahl des Films kleiner ist als die der Auflage, dadurch gekennzeichnet, dass für minimale Dispersion bei einer Brechzahl $(n_S)$ des Trägersubstrats (S) von 1,4 und einer Brechzahl $(n_F)$ des Films (F) von 1,51 sowie einer Brechzahl $(n_A)$ der Auflage (A) von 1,53 und einem Verhältnis der Dicke (d) der Auflage (A) zur Dicke (D) des Films (F) von 1:5 die Dicke (d) der Auflage (A) zu etwa einem 0,8fachen der Wellenlänge $\lambda$ der optischen Strahlung gewählt wird, so dass ein Filmparameter

$$V = \frac{2\pi}{\lambda} \cdot d \sqrt{n_A^2 - n_S^2}$$

den Wert von ungefähr 3,0 annimmt (vgl. Fig. 1 und 5).

3. Planarer Filmwellenleiter und/oder Komponenten für die integrierte Optik, bestehend aus einem Trägersubstrat, einem darauf aufgebrachten, die optischen Wellen führenden Film und mindestens einer auf dem Film angeordneten optisch wirksamen Auflage, welche entweder schwach oder stark dispersiv ist, wobei die Brechzahl des Trägersubstrats kleiner ist als die des Films und die Brechzahl des Films kleiner ist als die der Auflage, dadurch gekennzeichnet, dass für maximale Dispersion bei einer Brechzahl $(n_S)$ des Trägersubstrats (S) von 1,4 und einer Brechzahl $(n_F)$ des Films (F) von 1,41 sowie einer Brechzahl $(n_A)$ der Auflage (A) von 1,68 und einem Verhältnis der Dicke (d) der Auflage (A) zur Dicke (D) des Films (F) von 1:10 die Dicke (d) der Auflage (A) zu etwa einem 0,34fachen der Wellenlänge $\lambda$ der optischen Strahlung gewählt wird, so dass ein Filmparameter

$$V = \frac{2\pi}{\lambda} \cdot d \sqrt{n_A^2 - n_S^2}$$

den Wert von ungefähr 2,0 annimmt (vgl. Fig. 1 und 6).

4. Anordnung nach einem der vorhergehenden Ansprüche, dadurch gekennzeichnet, dass die Auflage (A) ganz in den Film (F) eingelegt ist.

5. Anordnung nach einem der Ansprüche 1 bis 3, dadurch gekennzeichnet, dass die Auflage (A) bezüglich ihrer Dicke etwa zur Hälfte in dem Film (F) angeordnet ist.

6. Anordnung nach einem der Ansprüche 1 bis 3, dadurch gekennzeichnet, dass die Auflage (A) nur stellenweise auf dem Film (F) angeordnet ist.

7. Anordnung nach Anspruch 6, dadurch gekennzeichnet, dass die Auflage (A) in Form einer Linse (L) auf dem Film aufgebracht ist.

8. Anordnung nach Anspruch 6, dadurch gekennzeichnet, dass die Auflage (A) in Form eines Prismas (P) auf dem Film aufgebracht ist.

## Claims

1. Planar film wave guide and/or components for the integrated optical system consisting of a carrier substrate, a film applied thereon and guiding the optical waves and at least one optically effective overlay, which is arranged on the film and is either weakly or strongly dispersive, wherein the refractive index of the carrier substrate is smaller than that of the film and the refractive index of the film is smaller than that of the overlay, characterised thereby, that for minimum dispersion in the case of a refractive index ($n_S$) of the carrier substrate (S) of 1.4 and a refractive index ($n_F$) of the film (F) of 1.51 as well as a refractive index ($n_A$) of the overlay (A) of 1.53 and a ratio of the thickness (d) of the overlay (A) to the thickness (D) of the film (F) of 1:10, the thickness (d) of the overlay (A) is chosen to be about 0.65 times the wavelength $\lambda$ of the optical radiation so that a film parameter

$$V = \frac{2\pi}{\lambda} \cdot d \sqrt{n_A^2 - n_S^2}$$

assumes the value of approximately 2.7 (compare Figs. 1 and 4).

2. Planar film wave guide and/or components for the integrated optical system consisting of a carrier substrate, a film applied thereon and guiding the optical waves and at least one optically effective overlay, which is arranged on the film and is either weakly or strongly dispersive, wherein the refractive index of the carrier substrate is smaller than that of the film and the refractive index of the film is smaller than that of the overlay, characterised thereby, that for minimum dispersion in the case of a refractive index ($n_S$) of the carrier substrate (S) of 1.4 and a refractive index ($n_F$) of the film (F) of 1.51 as well as a refractive index ($n_A$) of the overlay (A) of 1.53 and a ratio of the thickness (d) of the overlay (A) to the thickness (D) of the film (F) of 1:5, the thickness (d) of the overlay (A) is chosen to be about 0.8 times the wavelength $\lambda$ of the optical radiation so that a film parameter

$$V = \frac{2\pi}{\lambda} \cdot d \sqrt{n_A^2 - n_S^2}$$

assumes the value of approximately 3.0 (compare Figs. 1 and 5).

3. Planar film wave guide and/or components for the integrated optical system consisting of a carrier substrate, a film applied thereon and guiding the optical waves and at least one optically effective overlay, which is arranged on the film and is either weakly or strongly dispersive, wherein the refractive index of the carrier substrate is smaller than that of the film and the refractive index of the film is smaller than that of the overlay, characterised thereby, that for maximum dispersion in the case of a refractive index ($n_S$) of the carrier substrate (S) of 1.4 and a refractive index ($n_F$) of the film (F) of 1.41 as well as a refractive index ($n_A$) of the overlay (A) of 1.68 and a ratio of the thickness (d) of the overlay (A) to the thickness (D) of the film (F) of 1:10, the thickness (d) of the overlay (A) is chosen to be about 0.34 times the wavelength $\lambda$ of the optical radiation so that a film parameter

$$V = \frac{2\pi}{\lambda} \cdot d \sqrt{n_A^2 - n_S^2}$$

assumes the value of approximately 2.0 (compare Figs. 1 and 6).

4. Arrangement according to one of the preceding claims, characterised thereby, that the overlay (A) is laid entirely into the film (F).

5. Arrangement according to one of the claims 1 to 3, characterised thereby, that the overlay (A) is in respect of its thickness arranged about half in the film (F).

6. Arrangement according to one of the claims 1 to 3, characterised thereby, that the overlay (A) is arranged on the film (F) only in places.

7. Arrangement according to claim 6, characterised thereby, that the overlay (A) is applied on the film in the shape of a lens (L).

8. Arrangement according to claim 6, characterised thereby, that the overlay (A) is applied on the film in the shape of a prism (P).

## Revendications

1. Guide d'ondes intégré planar et/ou composants pour l'optique intégrée, constitués par un substrat, un film déposé sur ce dernier et guidant les ondes optiques, et au moins une couche active optiquement, déposée sur le film et présentant une faible ou une forte dispersion, l'indice de réfraction du substrat étant inférieur à celui du film et l'indice de réfraction du film étant inférieur à celui de la couche, ledit guide étant caractérisé en ce que pour une dispersion minimale avec un indice de réfraction ($n_S$) de 1,4 du substrat (S), un indice de réfraction ($n_F$) de 1,51 du film (F), un indice de réfraction ($n_A$) de 1,53 de la couche (A) et un rapport de 1/10 de l'épaisseur (d) de la couche (A) à l'épaisseur (D) du film (F), l'épaisseur (d) de la couche (A) choisie est d'environ 0,5 fois la longueur d'onde $\lambda$ du rayonnement optique, de sorte qu'un paramètre du film

$$V = \frac{2\pi}{\lambda} \cdot d \sqrt{n_A^2 - n_S^2}$$

présente une valeur d'environ 2,7 (cf. figures 1 et 4).

2. Guide d'ondes intégré planar et/ou composants pour l'optique intégrée, constitués par un substrat, un film déposé sur ce dernier et guidant les ondes optiques, et au moins une couche active optiquement déposée sur le film et présentant une faible ou une forte dispersion, l'indice de réfraction du substrat étant inférieur à celui de la couche, ledit guide étant caractérisé en ce que pour une dispersion minimale avec un indice de réfraction ($n_S$) de 1,4 du substrat (S), un indice de réfraction ($n_F$) de 1,51 du film (F), un indice de réfraction ($n_A$) de 1,53 de la couche (A) et un rapport de 1/5 de l'épaisseur (d) de la couche (A) à l'épaisseur (D) du film (F), l'épaisseur (d) de la couche (A) choisie est de 0,8 fois la longueur d'onde λ du rayonnement optique, de sorte qu'un paramètre du film

$$V = \frac{2\,\pi}{\lambda} \cdot d \sqrt{n_A^2 - n_S^2}$$

présente une valeur d'environ 3,0 (cf. figures 1 et 5).

3. Guide d'ondes intégré planar et/ou composants pour l'optique intégrée, constitués par un substrat, un film déposé sur ce dernier et guidant les ondes optiques, et au moins une couche active optiquement déposée sur le fil et présentant une faible ou une forte dispersion, l'indice de réfraction du substrat étant inférieur à celui de la couche, ledit guide étant caractérisé en ce que pour une dispersion maximale avec un indice de réfraction ($n_S$) de 1,4 du substrat (S), un indice de réfraction ($n_F$) de 1,41 du film (F), un indice de réfraction ($n_A$) de 1,68 de la couche (A) et un rapport de 1/10 de l'épaisseur (d) de la couche (A) à l'épaisseur (D) du film (F), l'épaisseur (d) de la couche (A) choisie est d'environ 0,34 fois la longueur d'onde λ du rayonnement optique, de sorte qu'un paramètre du film

$$V = \frac{2\,\pi}{\lambda} \cdot d \sqrt{n_A^2 - n_S^2}$$

présente une valeur d'environ 2,0 (cf. figures 1 et 6).

4. Dispositif selon une quelconque des revendications 1 à 3, caractérisé en ce que la couche (A) est totalement intégrée dans le film (F).

5. Dispositif selon une quelconque des revendications 1 à 3, caractérisé en ce que l'épaisseur (A) est disposée sensiblement jusqu'à sa demi-épaisseur dans le film (F).

6. Dispositif selon une quelconque des revendications 1 à 3, caractérisé en ce que la couche (A) n'est disposée que par endroits sur le film (F).

7. Dispositif selon revendication 6, caractérisé en ce que la couche (A) est déposée sous forme d'une lentille (L) sur le film.

8. Dispositif selon revendication 6, caractérisé en ce que la couche (A) est déposée sous forme d'un prisme (P) sur le film.

FIG. 1

FIG. 2

FIG. 3

$n_A = 1,53 \qquad n_F = 1,51 \qquad n_S = 1,4 \qquad d/D = 1:10$

DISPERSIONSVERLAUF FÜR DIE GRUNDWELLE IN EINER
ANORDNUNG AUS 2 FILMEN AUF EINEM SUBSTRAT

FIG. 4

$n_A = 1{,}53$   $n_F = 1{,}51$   $n_S = 1{,}4$   $d/D = 1{:}5$

DISPERSIONSVERLAUF FÜR DIE GRUNDWELLE IN EINER
ANORDNUNG AUS 2 FILMEN AUF EINEM SUBSTRAT

FIG. 5

$n_A = 1,68 \qquad n_F = 1,41 \qquad n_S = 1,4 \qquad d/D = 1,10$

DISPERSIONSVERLAUF FÜR DIE GRUNDWELLE IN EINER
ANORDNUNG AUS 2 FILMEN AUF EINEM SUBSTRAT

FIG. 6